# EUROPÄISCHE PATENTSCHRIFT

(11) **EP 1 722 221 B1**
(45) Veröffentlichungstag und Bekanntmachung des Hinweises auf die Patenterteilung: **02.08.2017**
(21) Anmeldenummer: 06113157.9
(22) Anmeldetag: 26.04.2006
(51) Int. Cl.: G01N 29/024, G01N 29/032, G01N 29/22, G01F 1/66

(54) **Vorrichtung zur Bestimmung und/oder Überwachung des Volumen- und/oder Massedurchflusses eines Messmediums**
Device for determining and/or monitoring the volume flow rate and/or mass flow rate of a medium
Dispositif destiné à la détermination et/ou la surveillance du débit de masse et/ou de volume d'un milieu

(30) Priorität: 09.05.2005 DE 102005022048
(43) Veröffentlichungstag der Anmeldung: 15.11.2006
(73) Patentinhaber: Endress+Hauser Flowtec AG, 4153 Reinach (CH)
(72) Erfinder: Fröhlich, Thomas, 4142, Münchenstein (CH); Wiest, Achim, 79576, Weil am Rhein (DE); Berger, Andreas, 4153 Reinach (CH); Stocker, Harald, 79650, Schopfheim (DE); Strunz, Torsten, 4056, Basel (CH); Fleury, Auréle, 4147, Aesch (CH); Bussinger, Klaus, 4153 Reinach (CH); Brumberg, Oliver, 79618, Rheinfelden (DE); Oudoire, Patrick, 68360, Soultz (FR); Jacobsen, Saul, 4058, Basel (CH); Berberig, Oliver, 79739, Schwörstadt (DE); Wandeler, Frank, 5405, Baden-Dättwil (CH)
(74) Vertreter: Andres, Angelika Maria

(56) Entgegenhaltungen:
- EP-A2- 0 537 735
- WO-A1-97/24585
- GB-A- 2 363 455
- US-A- 5 983 730

## Beschreibung

Die Erfindung betrifft eine Vorrichtung zur Bestimmung und/oder Überwachung des Volumen- und/ oder Massendurchflusses eines Messmediums, das eine Rohrleitung bzw. ein Messrohr durchströmt, mit mehreren Ultraschallsensoren, die die Ultraschall-Messsignale entlang definierter Schallpfade aussenden und/oder empfangen, und mit einer Regel-/Auswerteeinheit, die den Volumen- und/oder den Massedurchfluss des Messmediums in der Rohrleitung / in dem Messrohr anhand der Ultraschall-Messsignale nach einem Schallmitnahmeverfahren oder nach dem Echo-Prinzip ermittelt.

Bekannte Ultraschall-Durchflussmessgeräte bestehen aus einer Ansteuer- / Auswerteelektronik und Ultraschallsensoren, die elektrische Signale in Ultraschall-Messsignale umwandeln und umgekehrt. Werden Ultraschall-Durchflussmessgeräte für hochgenaue Messungen eingesetzt, so ist es unumgänglich, die Messungen in mehreren Kanälen bzw. auf mehreren Schallpfaden durchzuführen. Mittels der Messung auf mehreren Schallpfaden lässt sich das aktuelle Strömungsprofil und damit die aktuelle Durchflussgeschwindigkeit des Messmediums durch eine Rohrleitung bzw. durch das Messrohr hinreichend genau bestimmen.

Die EP 0 537 735 A2 offenbart eine sogenannte DAS (delay and sum) Steuerung der Ultraschallwandler, wie sie in der Medizintechnik angewandt wird. Dabei werden ebenfalls Multiplexer genutzt.

Die GB 2 363 455 A offenbart einem Durchflussmesser, welcher nach dem Echo-Prinzip arbeitet. Speziell in der D2 wird der Durchfluss eines teilgefüllten Rohres ermittelt, welches als zusätzliche Messherausforderung eine zweiphasige Flüssigkeit enthält. Bekanntermaßen erfolgt die Messung beim Echoprinzip nach dem Dopplerverfahren.

Die WO97/24585 offenbart einen Ultraschall-Durchflussmesser mit sternförmig um das Messrohr angeordneten Ultraschallwandlern. Die zahlreichen Sende- und Empfangskabel führen zu einem Multiplexer.

Zwecks Ansteuerung der Ultraschallsensoren und Auswertung der von den Ultraschallsensoren gesendeten und empfangenen Ultraschall-Messsignale ist es erforderlich, dass die elektrischen Signale von und zu jedem der einzelnen Ultraschallsensoren geführt werden. In vielen Anwendungsfällen ist hierbei die Elektronik von der Messstelle mit den Ultraschallsensoren räumlich getrennt. Entfernungen bis zu ca. 100 m sind keine Seltenheit. Die elektrische Verdrahtung erfolgt üblicherweise über Koaxial- oder Triaxial-Kabel, also sehr hochwertige und damit teuere Kabel. Diese Kabel zeichnen sich durch eine sehr gute Abschirmung der relativ schwachen elektrischen Signale, insbesondere der Empfangssignale aus; allerdings sind sie relativ teuer. Wünschenswert ist auf diesem Hintergrund eine Herabsetzung der Kosten für Verkabelung zwischen der Elektronik mit Bedienung und Anzeige und den Ultraschallsensoren.

Der Erfindung liegt die Aufgabe zugrunde, ein kostengünstiges Ultraschall-Durchflussmessgerät mit mehreren Schallpfaden vorzuschlagen.

Die Aufgabe wird dadurch gelöst, dass eine Vorortelektronik vorgesehen ist, in der zumindest ein erster Umschalter vorgesehen ist, über den die in unterschiedlichen Schallpfaden angeordneten Ultraschallsensoren ansteuerbar und/oder abfragbar sind, und dass zumindest eine entfernte Regel-/Auswerteeinheit vorgesehen ist, wobei die Regel-/Auswerteeinheit den ersten Umschalter so schaltet, dass der angesteuerte und/oder abgefragte Ultraschallsensor bzw. das angesteuerte und/oder abgefragte Paar von Ultraschallsensoren aktiviert ist und Messwerte bereitstellt.

Kurz gesagt, zeichnet sich die erfindungsgemäße Lösung durch einen zeitlichen Multiplex der elektrischen Signale der Ultraschallsensoren aus. In der eigentlichen Messstelle, sprich dem Messrohr bzw. der Rohrleitung mit den - bei Anwendung des Laufzeitdifferenzverfahrens - paarweise angeordneten Ultraschallsensoren, ist neben den passiven Komponenten, die elektrische Signale in Schall wandeln und umgekehrt, zusätzlich ein Umschalter enthalten. Gemäß einer Weiterbildung der erfindungsgemäßen Vorrichtung sind die Vorortelektronik und die Regel-/Auswerteeinheit über zumindest eine Verbindungsleitung miteinander verbunden.

Bei der erfindungsgemäßen Vorrichtung ist vorgesehen, dass ein zweiter Umschalter und eine Synchronisierungs-einheit der Regel-/Auswerteeinheit zugeordnet sind. Somit verfügt auch die Auswerteelektronik bzw. die Vorortelektronik über einen Umschalter und eine Synchronisationsschaltung zur Einstellung der Schalterposition der Messstelle. Ermöglicht wird dies dadurch, dass erfindungsgemäß immer nur ein Ultraschallsensor aktiv ist. Aus der Vielzahl der Ultraschallsensoren kann somit nur der erste Ultraschallsensor eines Paares senden; zeitversetzt empfängt der dem ersten Ultraschallsensor zugeordnete zweite Ultraschall-sensor das Ultraschall-Messsignal des ersten Ultraschallsensors. Sukzessive wird so in einem Messzyklus jeder Ultraschallsensor zweimal angesprochen: einmal als Sender und einmal als Empfänger. Ein Messzyklus, mit dem die Ultraschallsensoren das Strömungsprofil quasi seriell abtasten, ist auch durchaus hinreichend schnell, da davon ausgegangen werden darf, dass sich das Strömungsprofil und die Durchflussgeschwindigkeit des Messmediums nicht während eines Messzyklus' signifikant verändern. Bevorzugt liegen die Frequenzen der Umschaltung unter 10 kHz; hierdurch ist es möglich, kostengünstigere NF-Kabel zu verwenden. Hingegen liegen die üblichen Frequenzen für die Ultraschall-Messsignale in der Größenordnung von mehreren MHz. Zumindest weisen die Ultraschall-Messsignale aber eine Frequenz von größer als 100 kHz auf.

Eine vorteilhafte Weiterbildung der erfindungsgemäßen Vorrichtung sieht darüber hinaus eine Eingabeeinheit vor, über die die Umschaltfrequenz des ersten Umschalters und/oder des zweiten Umschalters so auswählbar ist, dass die Umschaltfrequenz in Abhängigkeit von den jeweiligen system- und/oder prozessspezifischen Größen optimierbar ist.

Eine weitere Vereinfachung kann ein Verlagern der Ansteuerung bzw. der Sendestufe der Ultraschallsensoren zur Messstelle sein. In diesem Fall wird nur noch ein hochwertiges Kabel benötigt, das die Messstelle und die Auswertelektronik verbindet. Hochwertige heißt hierbei, dass das Kabel eine sehr gute Abschirmung und eine geringe Dämpfung aufweist.

Die Informationsübermittlung zur Stellung der Schalter lässt sich über preiswerte Signalleitungen realisieren. Auch ist es möglich, die Information zur Stellung der Schalter seriell zu übertragen, so dass die Anzahl der Leitungen nochmals reduziert werden kann.

Alternativ ist es selbstverständlich möglich, dass eine erste elektrische Verbindungsleitung zwischen der Regel-/Auswerteeinheit und der Vorort-elektronik für den Sendebetrieb der Ultraschallsensoren vorgesehen ist, und dass eine zweite elektrische Verbindungsleitung zwischen der Regel-/Auswerteeinheit und der Vorortelektronik für den Empfangsbetrieb der Ultraschallsensoren vorgesehen ist. Bevorzugt besteht die Verbindungsleitung aus abgeschirmten und nicht abgeschirmten Adern besteht.

Die Erfindung wird anhand der nachfolgenden Zeichnungen näher erläutert. Es zeigt:
Fig. 1: eine schematische Darstellung einer ersten Ausführungsform der erfindungsgemäßen Vorrichtung und
Fig. 2: eine schematische Darstellung einer zweiten Ausführungsform der erfindungsgemäßen Vorrichtung.

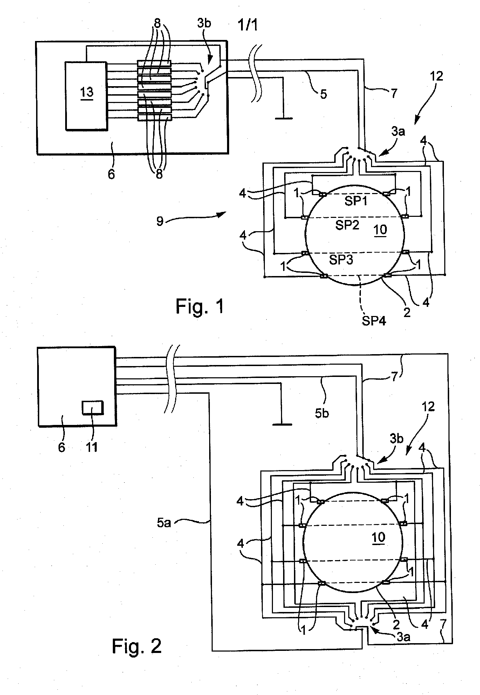

Fig. 1 zeigt eine schematische Darstellung einer ersten Ausführungsform des erfindungsgemäßen Ultraschall-Durchflussmessgeräts 9. Bei dem Ultraschall-Durchflussmessgerät 9 handelt es sich entweder um ein Inline-Durchfluss-messgerät, bei dem die Ultraschallsensoren 1 in die Wandung eines Mess-rohres 2 integriert sind, oder um ein Clamp-On Durchflussmessgerät, bei dem die Ultraschallsensoren 1 von außen über einen Befestigungsmechanismus an der Rohrleitung 2 fixiert sind.

Um das Strömungsprofil des in der Rohrleitung 2 bzw. in dem Messrohr strömenden Messmediums 10 mit hoher Messgenauigkeit bestimmen zu können, sind vier Paare von Ultraschallsensoren 1 über den Umfang verteilt an der Rohrleitung 2 bzw. an dem Messrohr angeordnet. Die Strömungs-geschwindigkeit bzw. der Volumen- oder Massedurchfluss durch die Rohrleitung 2 bzw. durch das Messrohr wird im gezeigten Fall über ein Laufzeitdifferenzverfahren der Ultraschall-Messsignale bestimmt, die das Messmedium 10 in und entgegen der Strömungsrichtung des Messmediums 10 durch laufen.

Die Elektronik zur Ansteuerung der Ultraschallsensoren 1 und zur Auswertung der Laufzeitdifferenz der Ultraschall-Messsignale ist erfindungsgemäß aufgeteilt in eine Vorortelektronik mit dem Umschalter 3a, die der Messstelle - sprich dem Messrohr 2 mit Ultraschallsensoren 1 - unmittelbar zugeordnet ist und einer entfernten Regel-/Auswerteeinheit 6, die den Umschalter 3b enthält. Der entfernten Regel-/Auswerteeinheit 6 ist bevorzugt auch eine Bedieneinheit 11 zugeordnet.

Erfindungsgemäß wird ein zeitlicher Multiplex der elektrischen Signale der Ultraschallsensoren 1 durchgeführt. In der eigentlichen Messstelle, sprich dem Messrohr 2 bzw. der Rohrleitung mit den - bei Anwendung des Laufzeit-differenzverfahrens - paarweise angeordneten Ultraschallsensoren 1, ist neben den passiven Komponenten, die elektrische Signale in Schall wandeln und umgekehrt, zusätzlich der Umschalter 3a enthalten. Die Vorortelektronik und die Regel-/Auswerteeinheit 6 sind über die Verbindungsleitung 5 miteinander verbunden. Bei dieser Verbindungsleitung handelt es sich um eine hochwertige Leitung, da über sie die Sendesignale, insbesondere aber die relativ schwachen Empfangssignale störungsfrei übertragen werden müssen. Zusätzlich zu der hochwertigen Verbindungsleitung 5 ist im gezeigten Fall die Verbindungsleitung 7 zwischen dem Umschalter 3 in der Vorort-elektronik und dem Umschalter 3b in der Regel-/Auswerteeinheit 6. Über den Umschalter 3b werden die den einzelnen Ultraschallsensoren 1 zugeordneten Sende-/Empfangseinheiten 8 angesteuert. Bei der Verbindungsleitung 7, die der Synchronisation des Umschalters 3a in der Vorortelektronik und des Umschalters 3b in der Regel-/Auswerteeinheit 6 dient, kann es sich um ein kostengünstiges Kabel handeln.

Über die Eingabe-/Bedieneinheit 11 ist es möglich, die Umschaltfrequenz des ersten Umschalters 3a und/oder des zweiten Umschalters 3b so auszuwählen, dass die Umschaltfrequenz in Abhängigkeit von den jeweiligen system- und/ oder prozessspezifischen Größen optimierbar ist.

Bevorzugt liegt die Umschaltfrequenz unter 10 kHz; hierdurch ist es möglich, kostengünstigere NF-Kabel zu verwenden. Aufgrund der relativ langsamen Änderungen des Strömungsprofils genügt die zuvor genannte Umschalt-frequenz für eine hinreichend genaue Messung des Volumendurchflusses. Die Frequenz der Ultraschall-Messsignale liegt übrigens in der Größenordnung von mehreren MHz. Zumindest weisen die Ultraschall-Messsignale aber eine Frequenz von größer als 100 kHz auf.

In Fig. 2 ist eine schematische Darstellung eines Ultraschall-Durchflussmessgeräts 9, welches nicht Teil der Erfindung ist, dargestellt. Dieses unterscheidet sich von der in Fig. 1 gezeigten Ausführungs-form dadurch, dass zwei Umschalter 3a, 3b in der Vorortelektronik integriert sind. Hierbei genügt es, wenn relativ schwach abgeschirmte Kabel als Verbindungsleitungen 4 verwendet werden, da lediglich verhindert werden muss, dass ein Übersprechen zwischen den einzelnen Kabeln erfolgt. Damit wird es möglich, auch für die Verbindung zwischen den Umschaltern 3a, 3b und den Ultraschallsensoren 1 relativ kostengünstige Kabel zu verwenden. Lediglich für die Verbindung der Messstelle zu der Regel-/Auswerteeinheit ist noch zumindest ein Kabel 7 hoher Güte zur Übertragung der Sende- und/oder Empfangssignale erforderlich.

### Bezugszeichenliste

1 Ultraschallsensor
2 Rohrleitung / Messrohr
3 Umschalter
3a Umschalter
3b Umschalter
4 Verbindungsleitung 'Ultraschallsensor - Umschalter'
5 Verbindungsleitung 'Messstelle - Regel-/Auswerteeinheit'
5a elektrische Verbindungsleitung
5b elektrische Verbindungsleitung
6 Regel-/Auswerteeinheit
7 Verbindungsleitung für Synchronisationssignal'
8 Sende-/Empfangseinheit
9 Durchflussmessgerät
10 Messmedium
11 Bedieneinheit
12 Vorortelektronik
13 Synchronisationseinheit

## Patentansprüche

1. Vorrichtung zur Bestimmung und/oder Überwachung des Volumen- und/ oder Massendurchflusses eines Messmediums (10), das eine Rohrleitung (2) /ein Messrohr mit einem Innendurchmesser (D) in einer Strömungsrichtung (S) durchfließt, mit einer Messstelle mit mehreren Ultraschallsensoren (1), die die Ultraschall-Messsignale entlang definierter Schallpfade (SP) aussenden und/oder empfangen, und mit einer Regel-/Auswerteeinheit (6), die den Volumen- und/oder den Massedurchfluss des Messmediums (10) in der Rohrleitung (2) / in dem Messrohr anhand der Ultraschall-Messsignale nach dem Laufzeitdifferenzenverfahren ermittelt,
**dadurch gekennzeichnet,**
**dass** eine Vorortelektronik (12) vorgesehen ist, in der zumindest ein erster Umschalter (3a; 3b) vorgesehen ist, über den die in unterschiedlichen Schallpfaden (SP) angeordneten Ultraschallsensoren (1) ansteuerbar und/oder abfragbar sind, und
mit zumindest einer entfernten Regel-/Auswerteeinheit (6), wobei die Regel-/Auswerteeinheit (6) den zumindest einen Umschalter (3a; 3b) so schaltet,
**dass** ein angesteuertes und/oder abgefragtes Paar von Ultraschallsensoren (1) aktiviert ist und Messwerte bereitstellt,
wobei die Vorortelektronik (12) und die Regel-/Auswerteeinheit (6) über eine Verbindungsleitung (5) miteinander verbunden sind,
wobei die Verbindungsleitung (5) eine Leitung ist über welche Sendesignale als auch Empfangssignale übertragen werden,
wobei ein zweiter Umschalter (3b) und eine Synchronisierungseinheit (13) der Regel-/Auswerteeinheit (6) zugeordnet sind,
wobei die Vorrichtung dazu eingerichtet ist, immer nur einen Ultraschallsensor zu aktivieren.

2. Vorrichtung nach Anspruch 1,
**dadurch gekennzeichnet,**
**dass** die Frequenz der Ultraschall-Messsignale größer ist als 100 kHz und dass die Umschaltfrequenz des Umschalters (3a, 3b) kleiner ist als 10 kHz.

3. Vorrichtung nach einem oder mehreren der vorhergehenden Ansprüche,
**dadurch gekennzeichnet,**
**dass** eine Eingabeeinheit (11) vorgesehen ist, über die die Umschaltfrequenz des ersten Umschalters (3a) und/oder des zweiten Umschalters (3b) so auswählbar ist, dass die Umschaltfrequenz in Abhängigkeit von den jeweiligen system- und/oder prozessspezifischen Größen optimiert ist.

## Claims

1. Apparatus for determining and/or monitoring the volume flow and/or mass flow of a medium (10) that flows through a pipe (2) / a measuring tube with an internal diameter (D) in a flow direction (S), with a measuring point with multiple ultrasonic sensors (1) that emit and/or receive the ultrasonic measuring signals along defined sound paths (SP), and with a control/evaluation unit (6) that determines the volume flow and/or mass flow of the medium (10) in the pipe (2) / in the measuring tube using the ultrasonic measuring signals based on the transit time difference method,
**characterized in that**
local electronics (12) are provided, said electronics having at least a first changeover switch (3a, 3b) via which the ultrasonic sensors (1) arranged in various sound paths (SP) can be controlled and/or interrogated, and
with at least one remote control/evaluation unit (6), wherein the control/evaluation unit (6) switches the at least one changeover switch (3a, 3b) in such a way that a controlled and/or interrogated pair of ultrasonic sensors (1) is activated and provides measured values,
wherein the local electronics (12) and the control/evaluation unit (6) are interconnected via a connecting cable (5),
wherein the connecting cable (5) is a cable via which transmission signals as well as reception signals are sent,
wherein a second changeover switch (3b) and a synchronization unit (13) are assigned to the control/evaluation unit (6),
wherein the apparatus is set up to always activate only one ultrasonic sensor.

2. Apparatus as claimed in Claim 1,
**characterized in that**
the frequency of the ultrasonic measuring signals is greater than 100 kHz and that the changeover frequency of the changeover switch (3a, 3b) is less than 10 kHz.

3. Apparatus as claimed in one or more of the previous claims,
**characterized in that**
an input unit (11) is provided via which the changeover frequency of the first changeover switch (3a) and/or of the second changeover switch (3b) can be selected in such a way that the changeover frequency is optimized depending on the individual system-specific and/or process-specific variables.

## Revendications

1. Dispositif destiné à la détermination et/ou la surveillance du débit volumique et/ou massique d'un produit mesuré (10), qui s'écoule à travers une conduite (2) / un tube de mesure avec un diamètre intérieur (D) dans une direction d'écoulement (S), avec une cellule de mesure dotée de plusieurs capteurs à ultrasons (1), qui émettent et/ou reçoivent les signaux de mesure ultrasonores le long d'un chemin sonore (SP) défini, et avec une unité de régulation / d'exploitation (6) qui détermine le débit volumique et/ou massique du produit mesuré (10) dans la conduite (2) / dans le tube de mesure au moyen des signaux de mesure ultrasonores d'après la méthode de la différence des temps de propagation,
**caractérisé**
**en ce qu'**est prévue une électronique locale (12), dans laquelle est prévue au moins un premier commutateur inverseur (3a, 3b), par l'intermédiaire duquel les capteurs ultrasonores (1) disposés dans les différents chemins sonores (SP) peuvent être commandés et/ou interrogés, et
avec au moins une unité de régulation / d'exploitation (6) distante, l'unité de régulation / d'exploitation (6) commutant l'au moins un commutateur inverseur (3a, 3b) de telle sorte qu'une paire commandée et/ou interrogée de capteurs ultrasonores (1) est activée et met à disposition des valeurs mesurées, l'électronique locale (12) et l'unité de régulation / d'exploitation (6) étant reliées entre elles par le biais d'un câble de liaison (5),
le câble de liaison (5) étant une ligne à travers laquelle sont transmis à la fois les signaux d'émission et les signaux de réception,
un deuxième commutateur inverseur (3b) et une unité de synchronisation (13) étant attribués à l'unité de régulation / d'exploitation (6),
le dispositif étant configuré de telle manière à n'activer systématiquement qu'un seul capteur ultrasonore.

2. Dispositif selon la revendication 1,
**caractérisé**
**en ce que** la fréquence des signaux de mesure ultrasonores est supérieure à 100 kHz et en ce que la fréquence de commutation du commutateur inverseur (3a, 3b) est inférieure à 10 kHz.

3. Dispositif selon une ou plusieurs des revendications précédentes,
**caractérisé**
**en ce qu'**est prévue une unité d'entrée (11), par l'intermédiaire de laquelle la fréquence de commutation du premier commutateur inverseur (3a) et/ou du deuxième commutateur inverseur (3b) peut être sélectionnée de telle sorte que la fréquence de commutation est optimisée en fonction des différentes grandeurs spécifiques au système et/ou au process.
